# EUROPEAN PATENT APPLICATION

(11) **EP 4 174 680 A1**
(43) Date of publication of application: **03.05.2023**
(21) Application number: 21829078.1
(22) Date of filing: 24.06.2021
(51) Int. Cl.: G06F 16/242

(54) **SQL UNIFICATION METHOD, SYSTEM, AND DEVICE, AND MEDIUM**

(30) Priority: 24.06.2020 CN 202010587866
(71) Applicant: ZTE Corporation, Shenzhen, Guangdong 518057 (CN)
(72) Inventor: YAO, Lan, Shenzhen, Guangdong 518057 (CN)
(74) Representative: Novagraaf Technologies
(86) International application number: PCT/CN2021/102145
(87) International publication number: WO 2021/259367

(57) **Abstract**

Provided are a Structured Query Language (SQL) unification method, system, device, and medium. In the embodiments provided by the present disclosure, the difference of underlying storage computation is masked for a user by using a unified SQL, the user can submit for execution in multiple database systems by coding once, and cross-platform migration of applications can be achieved. By translating the unified SQL into SQL syntaxes of multiple different databases, capability expansion can be supported to be compatible with multiple databases.

## Description

### Cross-Reference to Related Application

The present disclosure is based on and claims priority to Chinese patent application CN202010587866.2, filed on June 24, 2020 and entitled "SQL Unification Method, System, Device, and Medium", the disclosure of which is hereby incorporated by reference in its entirety.

### Technical Field

The present disclosure relates to the technical field of Structured Query Language (SQL) query, and more particularly, to an SQL unification method, system, device, and medium.

### Background

The development of big data tends to "respecting association while neglecting collection" in the future, i.e. no longer collecting data locally in advance and then performing unified computation and analysis through a big data computing platform (e.g. Hadoop, Spark). Both the 2018 Gantner Controller Area Network In Automation (CIA) Summit and the 2019 Big Data Technology Conference (BDTC) Conference mentioned the development of this technology many times. Joint analysis is performed across databases of various data sources, such as comprehensive query across Spark, GreenPlum and Hive, through a set of query analysis engines in the future, and an operator can be intelligently pushed down to an appropriate computing engine according to the features of data.

At present, an analysis system for big data applications still uses SQL as a data query analysis language. But due to the differences in the underlying storage computing architecture, computing models, data formats, etc. the requirements and syntax of various big data open source software for SQL are different, such as Apache Spark SQL and Hive, and the requirements and syntax of large Massively Parallel Processing (MPP) database software for SQL are also different, such as GreenPlum and GBase.

Based on the scene consideration, an application system will adopt different component deployment strategies for the difference of storage computation cost. In a large-scale scene, Spark and Hive of a big data platform are used as a computation engine, while GreenPlum and GBase are used as a computation engine in a small-scale scene. When the application service software and code use different versions, the development efficiency is low, and the manpower consumption is large.

### Summary

Embodiments of the present disclosure provide an SQL unification method, system, device, and medium. The differences of various data computation engines are masked through a set of unified standard SQL syntax, so that an application can analyze and compute data of different computation architectures using a unified SQL. Meanwhile, the objective of cross-platform application migration is achieved through unified SQL syntax development.

According to an embodiment of the present disclosure, provided is a SQL unification method, which may include the following operations.

A syntax specification of a unified SQL is defined.

The unified SQL is parsed into a syntax tree.

The syntax tree is translated according to different SQL syntaxes to obtain multiple syntax trees.

The multiple syntax trees are inversely parsed to obtain SQL strings of different databases.

The SQL strings are submitted from different databases to an environment for execution, and a data result is returned.

In an exemplary embodiment, prior to translating the syntax tree, a validity check is performed on the syntax tree, and an alarm prompt is given for a non-standard syntax and function.

In an exemplary embodiment, after the validity check is completed, whether a form object of the syntax tree is a physical table or a logic table is judged, and when the form object is a physical table, the syntax tree is directly translated.
when the form object is a logic table, whether the logic table is a view schema or a physical table schema is judged, when the logic table is a view schema, the syntax tree is optimized according to an optimization rule, and then the optimized syntax tree is translated.
when the logic table is a physical table schema, an execution plan of a real physical table is generated.

In an exemplary embodiment, a query SQL based on the logic table is constructed, the query SQL queries a scene of the logic table according to a query condition, and the logic table judges whether the logic table is a view schema or a physical table schema according to the scene.

In an exemplary embodiment, the optimization rule includes a filter push-down rule and a field pruning rule.

According to another embodiment of the present disclosure, also provided a SQL unification system, which may include:
a definition module, configured to define a syntax specification of a unified SQL;
a parsing module, configured to parse the unified SQL into a syntax tree;
a translation module, configured to translate the syntax tree according to different SQL syntaxes to obtain a plurality of syntax trees;
an inverse parsing module, configured to inversely parse the plurality of syntax trees to obtain SQL strings of different databases; and
an execution module, configured to submit the SQL strings from different databases to an environment for execution, and return a data result.

In an exemplary embodiment, the system may further include:
a check module, configured to perform, prior to translating the syntax tree, a validity check on the syntax tree, and give an alarm prompt for a non-standard syntax and function.

In an exemplary embodiment, the system may further include:
a first judgment module, configured to judge, after the validity check is completed, whether a form object of the syntax tree is a physical table or a logic table;
a second judgment module, configured to judge whether the logic table is a view schema or a physical table schema;
an optimization module, configured to optimize the syntax tree according to an optimization rule when the logic table is a view schema; and
a combination creation module, configured to generate an execution plan of a real physical table when the logic table is a physical table schema.

In an exemplary embodiment, the second judgment module may include:
a query unit, configured to construct a query SQL based on the logic table, the query SQL querying a scene of the logic table according to a query condition; and
a judgment unit, configured to judge whether the logic table is a view schema or a physical table schema according to the scene.

According to yet another embodiment of the present disclosure, also provided a device for implementing SQL unification, which may include a memory, a processor, and a computer program that is stored on the memory and executable on the processor. The processor, when executing the program, implements the SQL unification method provided in the above embodiment.

According to yet another embodiment of the present disclosure, also provided a computer medium, having a computer program stored thereon which, when executed by a processor, implements the SQL unification method provided in the above embodiment.

### Brief Description of the Drawings

Fig. 1 is a flowchart of an SQL unification method according to an embodiment of the present disclosure.
Fig. 2 is a schematic diagram of an SQL unification system according to an embodiment of the present disclosure.
Fig. 3 is a flowchart of a method according to Embodiment 1 of the present disclosure.
Fig. 4 is a flowchart of a method according to Embodiment 2 of the present disclosure.
Fig. 5 is a flowchart of logic table query optimization according to an embodiment of the present disclosure.
Fig. 6 is a schematic structure diagram of a module according to Embodiment 3 of the present disclosure.

### Detailed Description of the Embodiments

The technical solution of the present disclosure will be described in detail below with reference to the accompanying drawings. In the description of the present disclosure, it is to be understood that the terms "first" and "second" are used for descriptive purposes only and are not to be understood as indicating or implying relative importance or implicitly indicating the number of technical features indicated, but only for distinguishing between different components.

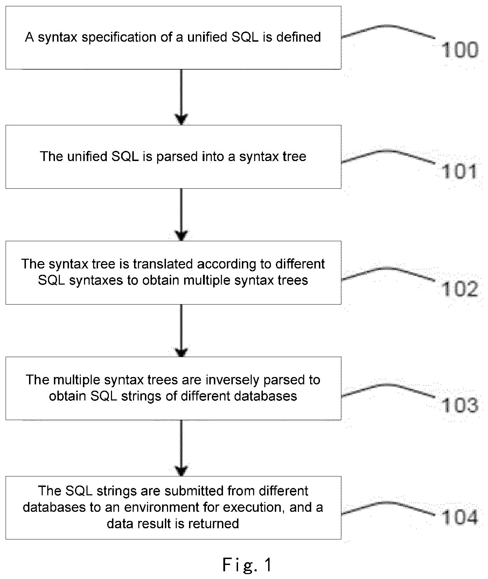

Fig. 1 is a flowchart of an SQL unification method according to an embodiment of the present disclosure. As shown in Fig. 1, a syntax specification of a unified SQL is defined. For example, on the basis of SQL 99, multiple SQL standard syntaxes are compatible, and a user is provided with a unified SQL language such as a Data Definition Language (DDL), a Data Query Language (DQL) and a Data Manipulation Language (DML). Then the unified SQL is parsed into a syntax tree, a syntax parsing rule is defined, the syntax parsing of the unified SQL is realized, and the unified SQL written by the user is parsed into the syntax tree.

The syntax tree is translated according to different SQL syntaxes to obtain multiple syntax trees. For example:
the translation is performed according to the syntax of Spark SQL, and a syntax tree of Spark SQL is constructed, while the translation is performed according to the syntax of GreenPlum SQL, and a syntax tree of GreenPlum SQL is constructed, and may be expanded to perform the translation simultaneously according to dialects of other various database syntaxes. Then the multiple syntax trees are inversely parsed to obtain SQL strings of different databases. For example, the syntax trees are parsed into strings of Spark SQL, parsed into SQL strings of GreenPlum, and also parsed into SQL strings of other databases. Finally, the corresponding SQL strings parsed into SQL strings of different databases are submitted to an environment for execution according to the configuration of a physical environment, and a data result is returned.

In the present embodiment, the difference of underlying storage computation is masked for a user by using a unified SQL, the user can submit for execution in multiple database systems by coding once, and cross-platform migration of applications can thus be achieved. In addition, in the present embodiment, by translating the unified SQL into SQL syntaxes of multiple different databases, capability expansion can be supported to be compatible with multiple databases.

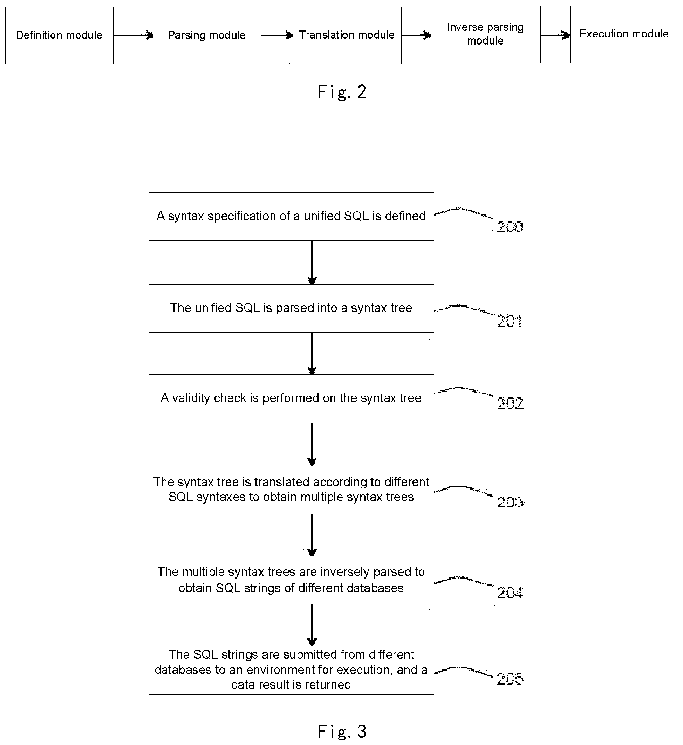

Fig. 2 is a schematic diagram of an SQL unification system according to an embodiment of the present disclosure. As shown in Fig. 2, the functions of various modules of the system are described with reference to the method of Fig. 1 and will not be described again.

### Embodiment 1

Different from the above embodiment, in the present embodiment, prior to translating the syntax tree, a validity check is performed on the syntax tree to check whether an SQL syntax of a tree node is a standard syntax or a standard function, and an alarm prompt is given for a non-standard syntax and function. As shown in Fig. 3, the method includes the following steps.

In step S200, a syntax specification of a unified SQL is defined.

In step S201, the unified SQL is parsed into a syntax tree.

In step S202, a validity check is performed on the syntax tree.

In step S203, the syntax tree is translated according to different SQL syntaxes to obtain multiple syntax trees.

In step S204, the multiple syntax trees are inversely parsed to obtain SQL strings of different databases.

In step S205, the SQL strings are submitted from different databases to an environment for execution, and a data result is returned.

### Embodiment 2

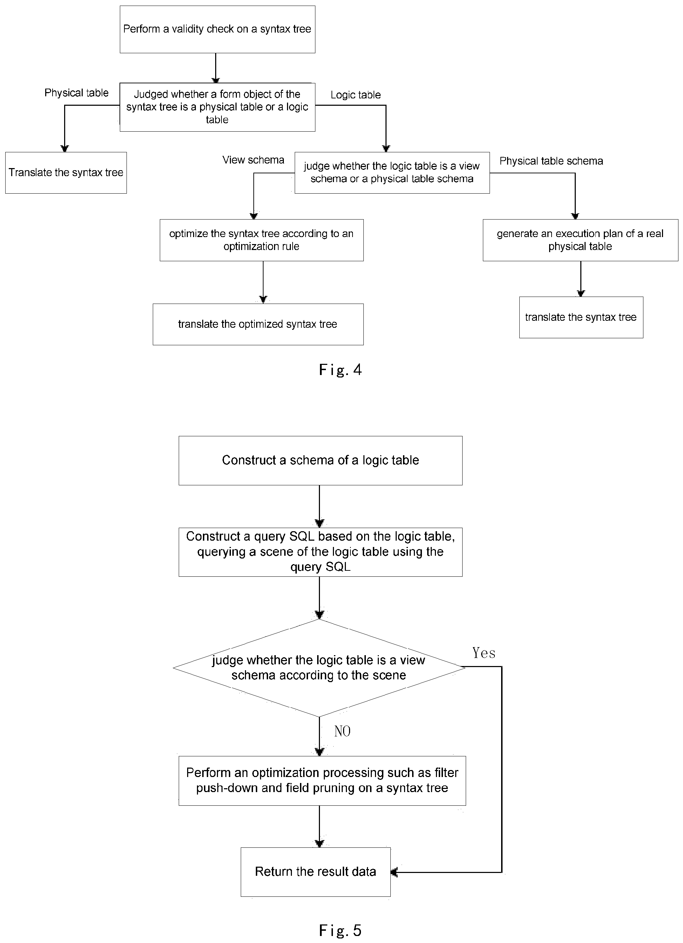

Different from the above embodiment, in the present embodiment, after the validity check is completed, whether a form object of the syntax tree is a physical table or a logic table is further judged, if the form object is a physical table, the syntax tree is directly translated, and if the form object is a logic table, whether the logic table is a view schema or a physical table schema is judged. If the logic table is a view schema, the syntax tree is optimized according to an optimization rule, the view is not really executed, and no computational overhead is introduced. If the logic table is a physical table schema, an execution plan of a real physical table is generated. The specific process steps of the present embodiment are shown in Fig. 4.

In the present embodiment, the optimization rule includes filter push-down and field pruning. The filter push-down refers to pushing down an original query condition into a filter condition of a logic table when the logic table is called, provided that the logic table must contain field information in the query condition. The field pruning refers to reducing the number of fields defined in an original logic table to the number of fields only used by the query when the logic table is called. In this way, the purpose of avoiding computing the full amount of data and saving computing resources can be achieved. If the logic table is a physical table schema, an execution plan of a real physical table is generated, whereby the full amount of data can be computed. In this scene, the full amount of data needs to be prepared for use in applications in advance.

In the present embodiment, the flow of using a logic table to realize query optimization is shown in Fig. 5, specifically as follows.
(1) A schema of a logic table is constructed, the logic table is visible to a service, and the logic table may be switched according to the difference of an underlying operating environment, and may be a view schema or a physical table schema. For example: create logic table fact_mr_only as select a as cellid, b as name from ods_mr.
(2) A query SQL based on a logic table is constructed, and some fields in the logic table are only queried. For example, there are two fields in the logic table, but only one field is found in a query statement. And a certain filter condition is added to the query condition. For example, a record with a cell ID equal to 1 is screened out: select cellid fromfact_mr_only where cellid=1.
(3) Whether the logic table is the view schema is judged according to a scene, if it is necessary to save computing resources and delay computation, the view schema is adopted, if it is necessary to perform full-amount computation, the physical table schema is adopted, and the full amount of data is prepared in advance.
(4) when the logic table is the view schema, processing such as filter push-down and field pruning is required, and only after executing the query SQL, computation is introduced. The query statement is expanded into: select cellid from (select a as cellid from ods_mrwhere cellid=1). when the logic table is the physical table schema, a table fact_mr_only with two fields: cellid and name will be firstly created, and field values a and b in the table ods_mr are inserted into the table fact_mr_only.
(5) Finally, an SQL statement is submitted to a computation engine, and an execution result is returned.

### Embodiment 3

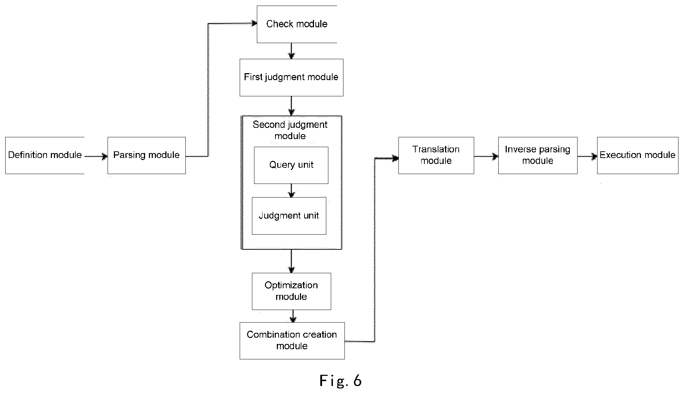

Fig. 6 is a schematic structure diagram of a module according to Embodiment 3 of the present disclosure, i.e. a schematic structure diagram of an SQL unification system according to an embodiment of the present disclosure. In the present embodiment, the specific implementation functions of various blocks may be referred to the above description and will not be described in detail.

While the foregoing is directed to exemplary embodiments of the present disclosure, the scope of the present disclosure is defined by the claims and their equivalents.

## Claims

1. A Structured Query Language, SQL, unification method, comprising:
defining a syntax specification of a unified SQL;
parsing the unified SQL into a syntax tree;
translating the syntax tree according to different SQL syntaxes to obtain a plurality of syntax trees;
inversely parsing the plurality of syntax trees to obtain SQL strings of different databases; and
submitting the SQL strings from different databases to an environment for execution, and returning a data result.

2. The SQL unification method according to claim 1, wherein before translating the syntax tree, a validity check is performed on the syntax tree, and an alarm prompt is given for a non-standard syntax and function.

3. The SQL unification method according to claim 2, wherein after the validity check is completed, judging whether a form object of the syntax tree is a physical table or a logic table, and when the form object is a physical table, the syntax tree is directly translated;
when the form object is a logic table, judging whether the logic table is a view schema or a physical table schema, when the logic table is a view schema, optimizing the syntax tree according to an optimization rule, and then translating the optimized syntax tree; and
when the logic table is a physical table schema, generating an execution plan of a real physical table.

4. The SQL unification method according to claim 3, wherein a query SQL based on the logic table is constructed, the query SQL queries a scene of the logic table according to a query condition, and whether the logic table is a view schema or a physical table schema is judged according to the scene.

5. The SQL unification method according to claim 4, wherein the optimization rule comprises a filter push-down rule and a field pruning rule.

6. A Structured Query Language, SQL, unification system, comprising:
a definition module, configured to define a syntax specification of a unified SQL;
a parsing module, configured to parse the unified SQL into a syntax tree;
a translation module, configured to translate the syntax tree according to different SQL syntaxes to obtain a plurality of syntax trees;
an inverse parsing module, configured to inversely parse the plurality of syntax trees to obtain SQL strings of different databases; and
an execution module, configured to submit the SQL strings from different databases to an environment for execution, and return a data result.

7. The SQL unification system according to claim 6, further comprising:
a check module, configured to perform, before translating the syntax tree, a validity check on the syntax tree, and give an alarm prompt for a non-standard syntax and function.

8. The SQL unification system according to claim 7, further comprising:
a first judgment module, configured to judge, after the validity check is completed, whether a form object of the syntax tree is a physical table or a logic table;
a second judgment module, configured to judge whether the logic table is a view schema or a physical table schema;
an optimization module, configured to optimize the syntax tree according to an optimization rule when the logic table is a view schema; and
a combination creation module, configured to generate an execution plan of a real physical table when the logic table is a physical table schema.

9. The SQL unification system according to claim 8, wherein the second judgment module comprises:
a query unit, configured to construct a query SQL based on the logic table, the query SQL querying a scene of the logic table according to a query condition; and
a judgment unit, configured to judge whether the logic table is a view schema or a physical table schema according to the scene.

10. The SQL unification system according to claim 9, wherein the optimization rule comprises a filter push-down rule and a field pruning rule.

11. A device for implementing Structured Query Language, SQL, unification, comprising a memory, a processor, and a computer program that is stored on the memory and executable on the processor, wherein the processor, when executing the program, implements the SQL unification method according to any one of claims 1 to 4.

12. A computer medium, having a computer program stored thereon which, when executed by a processor, implements the Structured Query Language, SQL, unification method according to any one of claims 1 to 4.
